Europäisches Patentamt

European Patent Office

Office européen des brevets

(11) Publication number: **0 172 456**

**A1**

(12) **EUROPEAN PATENT APPLICATION**

(21) Application number: **85109537.2**

(22) Date of filing: **29.07.85**

(51) Int. Cl.⁴: **A 01 G 25/14**

(30) Priority: **03.08.84 IT 3081184 U**

(43) Date of publication of application:
**26.02.86 Bulletin 86/9**

(84) Designated Contracting States:
**AT BE CH DE FR GB LI LU NL SE**

(71) Applicant: **EPOCA S.r.l.**
**Via Torino 3**
**I-36060 Romano d'Ezzelino (Vicenza)(IT)**

(72) Inventor: **Boriani, Romano**
**Via Pergolesi 32**
**I-36060 Romano d'Ezzelino(Vicenza)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Irrigator device particularly for low viscosity fluids.**

(57) This irrigator device comprises a hollow body (2) formed with one or more inner chambers (3) communicating at the bottom with a hollow slanted spout (11). The device body (2) is provided with two upper openings (9,10) for admitting a fluid. To one (10) of said openings there is associated a detachable member (16) for irrigating a fluid. Furthermore between the spout (11) and the device body (3) there is provided a holder (13) which can be used as handle (14). In this way it is possible to irrigate one or more fluids in different modes.

Fig.1

0172456

## "IRRIGATOR DEVICE PARTICULARLY FOR LOW VISCOSITY FLUIDS"

This invention relates to an irrigator device particularly for low viscosity fluids.

Currently in use, especially in a domestic environment, are many types of sprinkling, vaporising, and watering devices as holders for various fluid products employed.

Such known types exhibit individually taken the undisputed disadvantage of only performing one particular function, for example, that of atomising a liquid or making it easier to pour into a pot.

It follows that the user should have as many irrigator devices as are the functions to be performed thereby.

However, this involves, especially in a domestic environment, their continued moving to and from the areas where they are to be used, and it should be considered that most of the times the user must also have some other material available at the same time. Furthermore it is disadvantageous also the fact that the need of more devices results in a big space to store them.

It is a primary aim of this invention to obviate such prior inconvenience of conventional irrigator devices, by providing a device which enables irrigation with one fluid in different modes.

Another object is to allow simultaneous irrigation with the fluid in the different modes.

A not least object is to provide an irrigator device of low cost for manufacture with the usual plants.

These and other objects are achieved by an irrigator device characterized in that it comprises a hollow body formed with one or more inner chambers, at least one of said chambers communicating at its bottom with a hollow slanted spout, said body having two upper openings for admitting a fluid, with one of said openings there being associable a detachable means of irrigating with the fluid, and a holder element being secured between said spout and the central body.

Further features and advantages of the invention will be more readily apparent from the following detailed description of a device according to the invention, with reference to the accompanying photographic pictures, where:

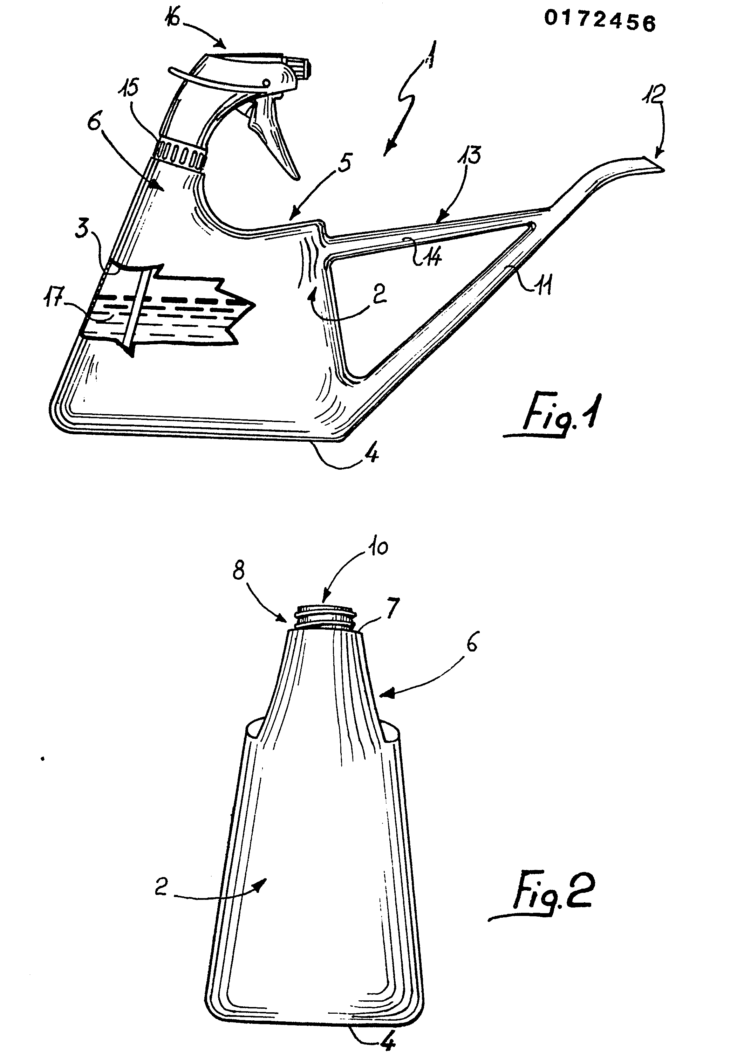

Figure 1 is a side view of the invention;

Figure 2 is a rear view of the same with the fluid irrigating means omitted for clarity;

Figure 3 is a top view similar to the preceding one;

Figure 4 shows a different embodiment.

With reference to the cited views, this irrigator device 1 comprises a hollow central body 2 of polypropylene, having a chamber 3 provided on its interior.

The body 2 has at the bottom a flat rest base 4, while at the top there are formed a flat area 5 merging with a raised area 6 ending at the top with an annular surface 7 whence an externally threaded tubular element 8 juts out.

The body 2 also has at the top a first circular opening 9 formed at the area 5, and a second opening 10, defined by the presence of the element 8, both openings communicating with the inner chamber 3.

The chamber 3 merges, in the proximity of the base 4 and on the remote side from the opening 10, with a hollow slanted spout 11 having an opening 12 at its free end.

A holder element 13 comprising a straight handle 14 is secured to the body 2 and spout 11.

With the element 8 there will be associated an oppositely handed thread ring nut 15 of a detachable member 16 for irrigating a fluid 17, said member being, for example, an atomiser.

The use of the device 1 involves initial pouring of the fluid 17 into the chamber 3.

Such liquid, essentially of a low viscosity, may be introduced either through the opening 9 or 10.

The type of the employed fluid may be decided upon according to necessity in conjunction with the type of irrigation sought.

In fact, the user may irrigate at the same time with the fluid 17 either through the spout 11 or the member 16.

Illustratively, the fluid 17 could be water: thus, by grabbing the handle 14 or the neck of the member 16, it becomes possible to irrigate with the fluid in the desired ways, while having the other hand free

- 4 -                                0172456

to do some other work.

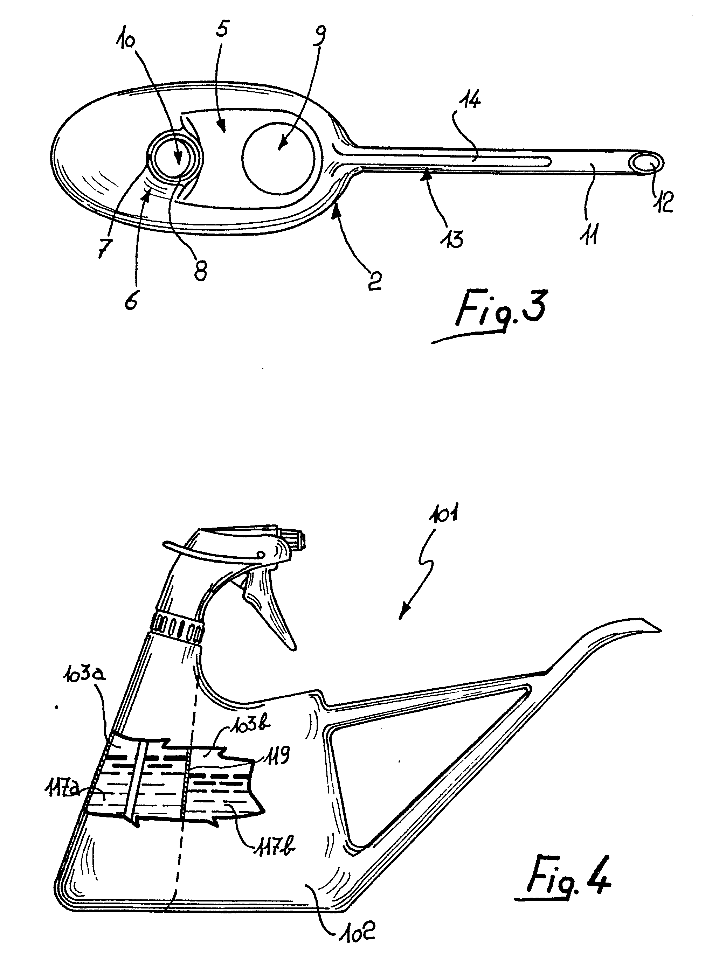

In a variation shown in Figure 4, the device 101 has a hollow central body 102 formed on its interior with two chambers 103a and 103b which are separated from each other by an impervious septum 119.

This enables the utilisation of two mutually different fluids 117a and 117b, the choice of the type being made either to suit the different type of irrigation preferred or the sough end use.

It has been thus shown that the irrigator device particularly for low viscosity fluids achieves all its objects, it allowing simultaneous irrigation with the selected fluid in the desired manner, its transportation being made easier by the handle 14.

In practicing the invention, the materials used and the dimensions may be any suitable ones to fill individual requirements.

## CLAIMS

1. An irrigator device having a hollow body (2,102) defining at least one inner chamber (3;103a,103b) communicating at its bottom with a hollow slanted spout (11), characterized in that said body has two upper openings (9,10) for admitting a fluid, with one of said openings (10) there being associable a detachable member (16) for irrigating a fluid, and a holder element (13) being secured between said spout (11) and the central body (2,102).

2. An irrigator device as in claim 1, comprising a hollow body (2) characterized in that it has, on its interior, a chamber (3), said body having at the bottom a flat rest base (4).

3. An irrigator device as in claims 1 and 2, comprising a hollow body (2) characterized in that it has at the top first and second openings (9,10) communicating with the inner chamber (3), said first opening (10) being formed in a raised area merging with the hollow body and having an outside threaded end (7).

4. A device as in claims 1,2 and 3, comprising a hollow body characterized in that it has, in the proximity of the rest base (4) thereof, and at the second opening, an internally hollow spout (11) in communication with the inner chamber (3), the end of said spout having an opening (12) located on a plane above and parallel to that of said second opening (9).

5. A device as in the preceding claims, characterized in that it has a holder element (13) including a straight handle (14) placed between said spout (11) and the outer surface of the hollow body (2).

6. A device as in claim 1, characterized in that it has a detachable fluid irrigating member (16), including an atomiser associable through a ring nut (15) with the raised threaded end (7) wherein the first opening (10) is formed.

7. A device as in claim 1, characterized in that it is formed from a plastics material, preferably from polypropylene.

8. An irrigator device as in the preceding claims, characterized in that it has an impervious septum (119) within the hollow body (102), said septum defining two discrete chambers (103a,103b) not communicating with each other, said two chambers being communicated the one at the first opening (10) and the other at the second opening (9).

1/2

0172456

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | GB-A- 502 511 (HAWS)<br><br>* Page 3, lines 18-31; figure 1 *<br><br>--- | 1,2,4,5 | A 01 G 25/14 |
| Y | GB-A-1 113 762 (TUDOR ACCESSORIES)<br>* Whole document * | 1,2,4,5 | |
| A | | 3,6 | |
| | --- | | |
| A | LU-A- 83 445 (DART INDUSTRIES)<br>* Page 4, line 4 - page 6, line 12; figures 1,5 *<br><br>--- | 1,2,6,7 | |
| A | US-A-2 253 071 (GORDON)<br>* Page 1, left-hand column, lines 1-7; page 2, left-hand column, lines 34-76; figures 1,2 *<br><br>--- | 3,6 | TECHNICAL FIELDS SEARCHED (Int. Cl 4)<br><br>A 01 G<br>B 05 B |
| A | FR-A- 993 145 (BILLON)<br>* Whole document *<br><br>----- | 8 | |

The present search report has been drawn up for all claims

| Place of search | Date of completion of the search | Examiner |
|---|---|---|
| THE HAGUE | 05-11-1985 | HERYGERS J.J. |